# EUROPEAN PATENT SPECIFICATION

(11) **EP 2 579 528 B1**
(45) Date of publication and mention of the grant of the patent: **21.05.2014**
(21) Application number: 11290438.8
(22) Date of filing: 26.09.2011
(51) Int. Cl.: H04L 12/815, H04L 12/841, H04L 29/08, H04L 12/24

(54) **A system and method for service initiation control in an access network**
System und Verfahren zur Dienstinitiierungssteuerung in einem Zugangsnetzwerk
Système et procédé de contrôle d'initiation de service dans un réseau d'accès

(43) Date of publication of application: 10.04.2013
(73) Proprietor: Alcatel Lucent, 75007 Paris (FR)
(72) Inventor: van Tilburg, Rudi, 2960 Brecht (BE); de Schepper, Koen, 2650 Edegem (BE)
(74) Representative: ALU Antw Patent Attorneys

(56) References cited:
- JP-A- 2008 097 314
- US-A1- 2003 033 359
- US-A1- 2011 161 488

## Description

### Field of the Invention

The present invention generally relates to service recovery in an access network in case of a network failure. More particularly, the invention concerns organizing the network recovery process when a large number of access terminals simultaneously restart after a general failure.

### Background of the Invention

When a network or service failure occurs in an access network, the connected access terminals that experience an out-of-service state will attempt to re-initiate the service. Service initiation towards authenticated services typically requires a handshaking process wherein multiple initiation messages are shared between the access terminal and server(s). If the server(s) can only process part of the initiation messages sent by all access terminals that nearly simultaneously attempt to restart after a general failure, then the probability that an access terminal receives a response to a single initiation message is P. P will for instance be 0,001 in case the processing capacity of a server for initiation messages under steady state conditions is dimensioned to be 1000 times smaller than the capacity effectively required to handle initiation messages of all access terminals. In a scenario where the restart process involves transmission of two subsequent initiation messages, only P² = 0,00001 initiation attempts will successfully pass the complete restart process. As a consequence, 99,9 % of the server's processing capacity is used for unsuccessful initiations, increasing the average initiation time for each access terminal by a factor 1000. The situation is even worse in case the restart process involves transmission of 3 or more initiation messages. Non-organized service recovery after a general network failure consequently results in unacceptable recovery lead times for access terminals, and indirectly to further failovers of servers in the access network whose processing capacity is nearly entirely consumed by unsuccessful recovery attempts.

A straightforward solution to this problem consists in over-dimensioning the processor capacity in servers by adding hardware such that simultaneous recovery of multiple access terminals after a network failure becomes possible without overloading the servers and consequently without risk for further server failures. Additional processing capacity however is costly, requires more space, maintenance, etc.

United States patent application US 2011/0161488 entitled "Reducing Workload on a Backend System Using Client Side Request Throttling" describes a solution for load balancing on a web server. In US 2011/0161488, the client terminal receives health state information (see for instance paragraph [0007] "sending the determined measure of health to a client") and a delay time function that is integrated for instance in the web browser calculates a delay time to the next request (see for instance paragraph [0018] "Each of the client users can have a client browser with a time delay function that can take the returned health value and calculate the corresponding time delay, typically in milliseconds."). The calculated delay time to the next request is configured in the terminal (see for instance paragraph [0018] "the onClick function ... delays the transmission of the request for a calculated time based on system health"). US 2011/0161488 however does not deal with service initiation after a failure and consequently does not teach how to calculate the delay time to the next re-initiation request after a general failure. US 2011/0161488 deals with load balancing on a web server.

It is an objective of the present invention to disclose a system and method for service recovery in an access network after a network failure that overcomes the above mentioned drawbacks. In particular, it is an objective to disclose a more efficient service initiation system and method that does not require over-dimensioning the processing capacity of servers, and that enables to reduce the initiation times of access terminals simultaneously re-initiating after a general network or server failure.

### Summary of the Invention

According to the current invention, the above mentioned objectives are realized by a system with connectivity to plural access terminals and at least one access server in an access network as defined by claim 1, the system comprising:
- load monitoring means adapted to receive server load reports from the at least one access server; and
- service initiation control means, responsive to the load reports and adapted to control the times for service initiation of the access terminals in case of network service recovery, said service initiation control means comprising:
- service initiation delay data generation means adapted to generate service initiation delay data from said server load reports, said service initiation delay data comprising a delay window;
- means adapted to transfer the service initiation delay data to the plural access terminals; and
- service initiation delay configuration means adapted to configure the time for sending a service initiation message in each access terminal from the service initiation delay data, the service initiation delay configuration means being adapted to calculate a random delay value within the delay window;
- delay means for delaying transmission of a service initiation message with the random delay value.

Indeed, by controlling the times where access terminals can send initiation messages or controlling the times whereon initiation messages from access terminals are admitted in function of the actual load reported by the servers, restart of multiple access terminals after a network or server outage is orchestrated and tuned such that servers experience no overload of initiation messages, are able to process the received initiation messages and consequently do not waste time and processing power in dealing with unsuccessful initiation attempts. The system according to the invention hence enables a smooth start-up of access terminals after a general network failure without risk for long initiation times and without the need for additional processing hardware in the servers. In accordance with the invention, server load reports are received and used to produce service initiation delay data. Based on the service initiation delay data, the access terminals can determine the time for sending service initiation messages. As a result, the service initiation messages will reach the access servers in a time controlled way. This controlled sending of service initiation messages will lead to smooth service start-up scenario's after a general network service failure, e.g. caused by a power outage. More precisely, the access terminals are enabled to calculate a random delay time that lies within a delay window that is calculated from the server load reports. The access terminal sends its first service initiation message applying the delay that corresponds with the calculated random value in the delay window.

Further optionally, according to the present invention, as defined by claim 2:
- the service initiation delay configuration means are adapted to calculate a random delay value from local default data in case of absence of the service initiation delay data.

Indeed, although the service delay process is guided by service initiation delay data calculated from the server load reports, the access terminal may still be enabled to make use of local default data in case the service initiation delay data are not received or not timely received. The access terminal may be enabled to calculate a random delay value from local default data, thereby spreading the service initiation times and avoiding overload of access servers causing further service interruptions or lengthy start-up times.

As is indicated by claim 3, the local default data used by the access terminal in case of absence of service initiation delay data may comprise one or more of:
- an Internet Protocol or IP address of the access terminal;
- a Medium Access Control or MAC address of the access terminal.

Obviously, as will be appreciated by any skilled person, other local configured parameters may be used to randomize the service initiation delay calculated by the access terminal using a local algorithm in case of absence of service initiation delay data calculated from server load reports.

In addition to a system for service initiation control as defined by claim 1, the current invention also relates to a corresponding method for service initiation control as defined by claim 4, the method including
- receiving server load reports from at least one access server; and
- responsive to said load reports, controlling the times for service initiation of the access terminals by:
- generating service initiation delay data from the server load reports, the service initiation delay data comprising a delay window;
- transferring the service initiation delay data to the plural access terminals; and
- configuring the time for sending a service initiation message in each access terminal from the service initiation delay data by calculating a random delay value within the delay window and delaying transmission of a service initiation message with the random delay value.

### Brief Description of the Drawings

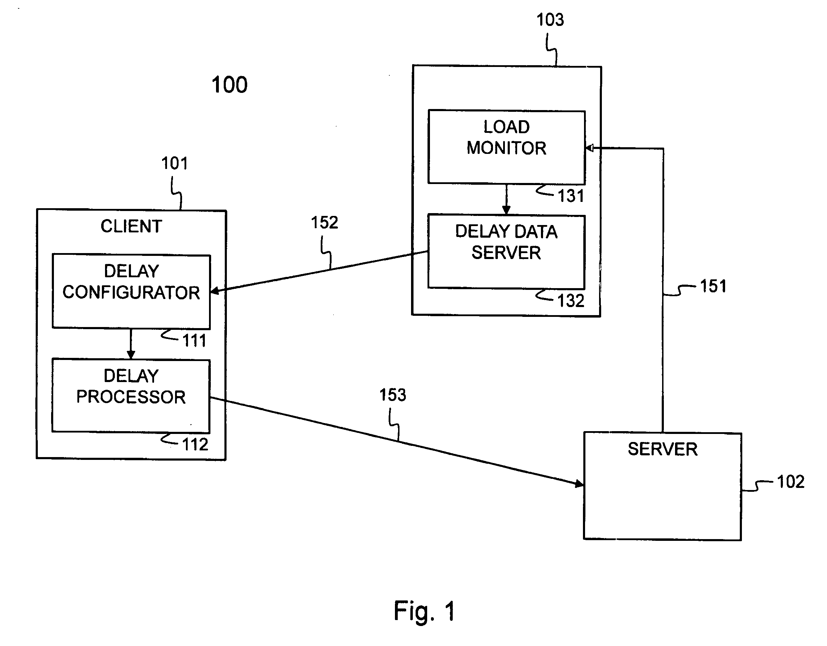

Fig. 1 is a functional block scheme of an embodiment of the system for service initiation according to the present invention.

### Detailed Description of Embodiment(s)

The current invention implements a new function in the access network that adopts a service initiation delay or filter process. This process is applied when initiation messages are massively sent out, e.g. after a network crash. The service initiation delay or filter process will delay or filter the service initiation requests such that not all access terminals simultaneously load the server(s). The key objective is to maintain the five 9's service delivery of servers. Thanks to the system and method according to the current invention, servers providing services to end users will not experience a heavy uncontrolled traffic load at service initiation after a network outage. This will increase the five 9's service delivery to customers. The main advantage of the current invention hence is a controlled overload in the access network during startup/restart of the service network. An advantageous side effect of this invention is a cost-reduction for the operator since the hardware installed base does not need to be over-dimensioned for extreme high load traffic.

The functional block model in Fig. 1 shows the different functional blocks in an embodiment of the system based on load monitoring and service initiation delay in the client terminals. A load monitor 131 in an intermediate server 103 receives server load reports 151 from the access network servers 102. Access network servers in the context of this patent application must be interpreted broadly to cover any aggregation network elements and/or core network elements that is involved in the processing of service initiation messages. Based on information extracted from the server load reports 151 by the load monitor 131, the service initiation delay data server 132 generates service initiation delay data 152 and transports this information to the client terminals 101 in the access network 100. A service initiation delay configurator 111 in client terminal 101 will use the service initiation delay data 152 to determine the delay time till service initiation. This information will thereupon be shared with a delay processor 112 that applies the delay before sending a first service initiation message 153 to the server 102. Time-controlling the sending of service initiation messages 153 in the different client terminals 101 based on server load reports 151 will lead to smooth service startup scenario's after a general network service failure, like for instance a power outage.

The service initiation delay process executed by the delay processor 112 is guided by the service initiation delay data 152 received from the load monitor 131 and delay data server 132. However, if the service initiation delay data 152 is not received from the service initiation delay data server 132, the client terminal 101 can still make use of local default configured data to randomize the delay for sending initiation messages. The local default configured data may for instance comprise an IP address and/or a MAC address of the client terminal 101.

The implementation of the delay configurator 111 and delay processor 112 at the service layer above the IP-layer (UDP, TCP) hence enables a smooth service recovery of the network. At the moment where IP connectivity is reached, the access terminal 101 that initiates the service request will delay its service initiation message 112 depending on information received from a service initiation delay data server 132 or an implemented local algorithm, e.g. based on static configured parameters at the access terminal like the IP-address or MAC-address. The service initiation delay data server 132 calculates its input 152 for the access terminals 101 via a load monitoring server 131. This load monitoring server 131 has an end-to-end view on as well the load as the capacity figures of the end-to-end service network.

In summary, a first implementation of the system according to the invention consists of implementing a capability at the user end point 101 to calculate a random delay time before it will send its first service initiation message after a failure. The random delay time is based on delay data 152 received from an intermediate server 103 that monitors the load of aggregation and core network elements, e.g. a service initiation delay window received from the service initiation delay data server 132 that sets boundaries for the random delay time calculated by a randomization algorithm in delay configurator 111.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A system with connectivity to plural access terminals (101; 201) and at least one access server (102; 202) in an access network (100; 200), said system comprising:
- load monitoring means (131; 231) adapted to receive server load reports (151; 251) from said at least one access server (102; 202); and
- service initiation control means (132, 111, 112; 232), responsive to said load reports (151; 251) and adapted to control the times for service initiation of said access terminals (101; 201) in case of network service recovery, said service initiation control means comprising:
- service initiation delay data generation means (132) adapted to generate service initiation delay data (152) from said server load reports (151), said service initiation delay data (152) comprising a delay window;
- means adapted to transfer said service initiation delay data (152) to said plural access terminals (101);
- service initiation delay configuration means (111) adapted to configure the time for sending a service initiation message (153) in each access terminal from said service initiation delay data (152), said service initiation delay configuration means (111) being adapted to calculate a random delay value within said delay window; and
- delay means (112) for delaying transmission of a service initiation message (153) with said random delay value.

2. A system according to claim 1, wherein:
- said service initiation delay configuration means (111) are adapted to calculate a random delay value from local default data in case of absence of said service initiation delay data (152).

3. A system according to claim 2, wherein said local default data comprise one or more of:
- an Internet Protocol or IP address of an access terminal (101);
- a Medium Access Control or MAC address of an access terminal (101).

4. A method for service initiation control of plural access terminals (101; 201) in case of network service outage in an access network (100; 200), said method comprising:
- receiving server load reports (151; 251) from at least one access server (102; 202); and
- responsive to said load reports (151; 251), controlling the times for service initiation of said access terminals (101; 201) by:
- generating service initiation delay data (152) from said server load reports (151), said service initiation delay data (152) comprising a delay window;
- transferring said service initiation delay data (152) to said plural access terminals (101); and
- configuring the time for sending a service initiation message (153) in each access terminal from said service initiation delay data (152) by calculating a random delay value within said delay window and delaying transmission of a service initiation message (153) with said random delay value.

## Patentansprüche

1. System mit Anschlussmöglichkeiten an mehrere Zugangsendgeräte (101; 201) und mindestens einem Zugangsserver (102; 202) in einem Zugangsnetzwerk (100; 200), wobei das besagte System umfasst:
- Lastüberwachungsmittel (131; 231), ausgelegt für den Empfang von Serverlastberichten (151; 251) von dem besagten mindestens einen Zugangsserver (102; 202); und
- Dienstinitiierungssteuerungsmittel (132, 111, 112; 232), welche auf die besagten Lastberichte (151; 251) reagieren und dazu ausgelegt sind, die Zeiten für die Dienstinitiierung der besagten Zugangsendgeräte (101; 201) im Fall einer Netzwerkdienstwiederherstellung zu steuern, wobei die besagten Dienstinitiierungssteuerungsmittel umfassen:
- Dienstinitiierungsverzögerungsdatenerzeugungsmittel (132), ausgelegt für die Erzeugung von Dienstinitiierungsverzögerungsdaten (152) aus den besagten Serverlastberichten (151), wobei die besagten Dienstinitiierungsverzögerungsdaten (152) ein Verzögerungsfenster umfassen;
- Mittel, welche für die Übertragung der besagten Dienstinitiierungsverzögerungsdaten (152) an die besagten mehreren Zugangsendgeräte (101) ausgelegt sind;
- Dienstinitiierungsverzögerungskonfigurationsmittel (111), ausgelegt für die Konfiguration der Sendezeit einer Dienstinitiierungsnachricht (153) in jedem Zugangsendgerät gemäß den besagten Dienstinitiierungsverzögerungsdaten (152), wobei die besagten Dienstinitiierungsverzögerungskonfigurationsmittel (111) dazu ausgelegt sind, einen Zufallsverzögerungswert innerhalb des besagten Verzögerungsfensters zu berechnen; und
- Verzögerungsmittel (112) zur Verzögerung der Übertragung der besagten Dienstinitiierungsnachricht (153) mit dem besagten Zufallsverzögerungswert.

2. System nach Anspruch 1, wobei
- die besagten Dienstinitiierungsverzögerungskonfigurationsmittel (111) für das Berechnen eines Zufallsverzögerungswertes gemäß lokalen Standarddaten im Fall des Nichtvorhandenseins der besagten Dienstinitiierungsverzögerungsdaten (152) ausgelegt sind.

3. System nach Anspruch 2, wobei die besagten lokalen Standarddaten entweder
- ein Internetprotokoll oder eine IP-Adresse eines Zugangsendgeräts (101); oder
- eine Medienzugriffssteuerungs- bzw. MAC-Adresse eines Zugangsendgeräts (101)
oder mehrere davon umfassen.

4. Verfahren für die Dienstinitiierungssteuerung mehrerer Zugangsendgeräte (101; 201) im Fall des Ausfalls eines Netzwerkdienstes in einem Zugangsnetzwerk (100; 200), wobei das besagte Verfahren umfasst:
- Empfangen von Serverlastberichten (151; 251) von mindestens einem Zugangsserver (102; 202); und
- in Reaktion auf die besagten Lastberichte (151; 251), Steuern der Zeiten für die Dienstinitiierung der besagten Zugangsendgeräte (101; 201) durch:
- Erzeugen von Dienstinitiierungsverzögerungsdaten (152) aus den besagten Serverlastberichten (151), wobei die besagten Dienstinitiierungsverzögerungsdaten (152) ein Verzögerungsfenster umfassen;
- Übertragen der besagten Dienstinitiierungsverzögerungsdaten (152) an die besagten mehreren Zugangsendgeräte (101); und
- Konfigurieren der Sendezeit einer Dienstinitiierungsnachricht (153) in jedem Zugangsendgerät gemäß den besagten Dienstinitiierungsverzögerungsdaten (152) durch Berechnen eines Zufallsverzögerungswertes innerhalb des besagten Verzögerungsfensters, und Verzögern der Übertragung einer Dienstinitiierungsnachricht (153) mit dem besagten Zufallsverzögerungswert.

## Revendications

1. Système disposant d'une connectivité avec une pluralité de terminaux d'accès (101 ; 201) et au moins un serveur d'accès (102 ; 202) dans un réseau d'accès (100 ; 200), ledit système comprenant :
- des moyens de surveillance de charge (131 ; 231) adaptés pour recevoir des rapports de charge de serveur (151 ; 251) de la part dudit au moins un serveur d'accès (102 ; 202) ; et
- des moyens de commande d'initiation de service (132, 111, 112 ; 232) réagissant auxdits rapports de charge (151 ; 251) et adaptés pour commander les moments d'initiation du service desdits terminaux d'accès (101 ; 201) dans le cas d'un rétablissement de service du réseau, lesdits moyens de commande d'initiation de service comprenant :
- des moyens de génération de données de retard d'initiation de service (132) adaptés pour générer des données de retard d'initiation de service (152) à partir desdits rapports de charge (151) du serveur, lesdites données de retard d'initiation de service (152) comprenant une fenêtre de retard ;
- des moyens adaptés pour transférer lesdites données de retard d'initiation de service (152) à ladite pluralité de terminaux d'accès (101) ;
- des moyens de configuration de retard d'initiation de service (111) adaptés pour configurer le moment d'envoi d'un message d'initiation de service (153) dans chaque terminal d'accès à partir desdites données de retard d'initiation de service (152), lesdits moyens de configuration de retard d'initiation de service (111) étant adaptés pour calculer une valeur de retard aléatoire à l'intérieur de ladite fenêtre de retard ; et
- des moyens de retard (112) pour retarder l'émission d'un message d'initiation de service (153) avec ladite valeur de retard aléatoire.

2. Système selon la revendication 1, avec lequel :
- lesdits moyens de configuration de retard d'initiation de service (111) sont adaptés pour calculer une valeur de retard aléatoire à partir de données par défaut locales en cas d'absence desdites données de retard d'initiation de service (152).

3. Système selon la revendication 2, avec lequel lesdites données par défaut locales comprennent une ou plusieurs des suivantes :
- une adresse de protocole Internet ou IP d'un terminal d'accès (101) ;
- une adresse de commande d'accès au support ou MAC d'un terminal d'accès (101).

4. Procédé de commande d'initiation de service d'une pluralité de terminaux d'accès (101 ; 201) dans le cas d'une interruption du service de réseau dans un réseau d'accès (100 ; 200), ledit procédé comprenant :
- réception de rapports de charge de serveur (151 ; 251) de la part d'au moins un serveur d'accès (102 ; 202) ; et
- en réaction auxdits rapports de charge (151 ; 251), commande des moments d'initiation du service desdits terminaux d'accès (101 ; 201) en :
- générant des données de retard d'initiation de service (152) à partir desdits rapports de charge (151), lesdites données de retard d'initiation de service (152) comprenant une fenêtre de retard ;
- transfert desdites données de retard d'initiation de service (152) à ladite pluralité de terminaux d'accès (101) ; et
- configuration du moment d'envoi d'un message d'initiation de service (153) dans chaque terminal d'accès à partir desdites données de retard d'initiation de service (152), en calculant une valeur de retard aléatoire à l'intérieur de ladite fenêtre de retard et en retardant l'émission d'un message d'initiation de service (153) avec ladite valeur de retard aléatoire.
